# FASCICULE DE BREVET EUROPEEN

(11) **EP 1 355 777 B1**
(45) Date de publication et mention de la délivrance du brevet: **11.06.2008**
(21) Numéro de dépôt: 02700357.3
(22) Date de dépôt: 22.01.2002
(51) Int. Cl.: B29D 11/00, B24B 13/005

(54) **PREFORME DE LENTILLE OPHTALMIQUE**
VORFORM FÜR OPHTALMISCHE LINSE
OPHTHALMIC LENS PREFORM

(30) Priorité: 23.01.2001 FR 0100868
(43) Date de publication de la demande: 29.10.2003
(73) Titulaire: ESSILOR INTERNATIONAL COMPAGNIE GENERALE D'OPTIQUE, 94227 Charenton cédex (FR)
(72) Inventeur: CHANSAVOIR, Alain, F-76220 Dampierre (FR); COMTE, Eric, F-77400 Thorigny sur Marne (FR); PAGGETTI, Franck, F-95500 Gonesse (FR); BELLY, Jean-François, F-94600 Choisy Le Roy (FR)
(74) Mandataire: Hirsch & Associés
(86) Numéro de dépôt international: PCT/FR2002/000248
(87) Numéro de publication internationale: WO 2002/058920

(56) Documents cités:
- EP-A- 0 657 246
- FR-A- 2 755 631
- GB-A- 2 084 493
- US-A- 3 577 690
- PATENT ABSTRACTS OF JAPAN vol. 017, no. 489 (C-1106), 6 septembre 1993 (1993-09-06) & JP 05 124824 A (MATSUSHITA ELECTRIC IND CO LTD), 21 mai 1993 (1993-05-21)

## Description

La présente invention concerne une préforme de lentille ophtalmique selon le préambule de la revendication 1. Une telle préforme est décrite dans le document GB-A-2 084 493.

Elle vise plus spécifiquement une préforme de lentille se présentant sous la forme d'un palet venu brut de moulage - en matériau synthétique ou minéral - et à partir de laquelle une lentille finie produisant la correction optique prescrite est obtenue par des opérations d'enlèvement de matière (dites de surfaçage).

Le processus de fabrication des lentilles ophtalmiques comporte généralement deux étapes principales.

Dans un premier temps, une galette ou préforme est obtenue par moulage de la matière synthétique ou minérale qui a été choisie pour constituer le substrat de base de la lentille. Chaque moule utilisé pour cette opération possède une forme et des dimensions prévues pour couvrir une certaine gamme de prescriptions et peut même, pour les prescriptions les plus courantes, être dédiée à la production en grande série de lentilles finis ayant des surfaces directement conformées aux prescriptions souhaitées. Mais pour les prescriptions moins répandues et/ou plus généralement dans un souci de simplification de la logistique et, corollairement, de réduction du nombre de lignes de moulage, il peut être préférable de limiter les chaînes de moulage à la production en grande série d'un nombre réduit, voire unitaire, de préformes standards. De telles préformes, sorte de lentilles semi-finies, doivent alors faire l'objet d'un certain nombre d'opérations de reprise avant d'aboutir à la lentille finie possédant les propriétés optiques spécifiques recherchées.

C'est ainsi que dans un second temps, la préforme venue de moulage est surfacée sur l'une et/ou l'autre de ses deux faces pour satisfaire au modèle géométrique et à la correction prescrits. Du fait des fortes exigences de précision et de rugosité auxquelles elle est soumise, cette opération de surfaçage est découpée en plusieurs sous-étapes associées à autant de postes de travail spécifiques, si bien qu'il est nécessaire d'organiser la circulation de la lentille en cours de surfaçage d'un poste à l'autre. On distingue ainsi généralement, pour le surfaçage de chaque face de la lentille, un poste d'usinage assurant à la fois ébauche et finition avec deux outils distincts et un poste de polissage, précédé éventuellement d'un poste de doucissage. Entre ces postes ou la suite de ceux-ci, d'autres postes de travail de la préforme/lentille (par exemple des poste de gravure, de contrôle, etc.) sont susceptibles d'intervenir. Une reprise de préforme/lentille sur chacun de ces postes supplémentaires avec un positionnement précis et maîtrisé peut s'avérer nécessaire.

L'un des problèmes les plus spécifiques rencontrés dans le cours de ce processus de surfaçage et plus généralement de travail de la préforme, réside dans les prises et reprises successives de la préforme à chacun de ses transferts d'un poste à l'autre. Cette sous-opération récurrente de prise et reprise de pièce, communément appelée «blocage » de lentille, est particulièrement délicate, coûteuse, et induit souvent des imprécisions de positionnement. On comprend en effet que la préforme de lentille, constituée de matière synthétique ou minérale transparente, est relativement fragile et doit être préservée de tout marquage, spécialement sur celle de ses deux faces qui est finie pendant que son autre face est en cours de travail. De plus, et surtout, la lentille doit être positionnée sur chaque poste concerné de manière très précise, avec une orientation spatiale connue dans un référentiel déterminé du poste concerné. En particulier, s'agissant de la fabrication de lentilles progressives n'admettant pas de symétrie de révolution, la position angulaire de la préforme autour de son axe central doit être précisément maîtrisée.

On connaît plusieurs manières de « bloquer» une lentille semi-finie pour son travail et en particulier son surfaçage. La méthode de la plus répandue en pratique à ce jour consiste à former et fixer par coulage, sur l'une des faces de la lentille, un bloc métallique de prise formé d'un alliage à bas point de fusion et présentant des moyens de préhension adaptés pour coopérer avec les organes de préhension du type mâchoires ou mandrin des différents postes intervenant. Cette méthode donne globalement satisfaction, mais présente plusieurs inconvénients.

Elle est tout d'abord coûteuse et relativement fastidieuse à mettre en oeuvre. Les alliages à bas point de fusion utilisés sont en effet d'un coût relativement élevé et doivent être considérés comme des polluants dangereux pour l'environnement, Si bien qu'il est nécessaire, tant pour des raisons économiques que de contraintes environnementales croissantes, d'organiser leur recyclage minutieux. Mais même avec un recyclage efficace, des pertes d'alliage par évaporation lors de la fusion ne peuvent être évitées.

Par ailleurs, outre cet aspect économique et environnemental, chaque lentille en cours de surfaçage doit être transportée d'un poste à l'autre avec son bloc de prise, ce qui constitue une gêne non seulement lors du transfert, mais également à l'occasion d'un éventuel stockage ou transport entre deux opérations. Il existe un temps minimal avant mise en oeuvre de la lentille associée à son bloc de prise sur un poste d'usinage (environ 15 minutes), ainsi qu'un temps maximal au-delà duquel l'usinage ne pourra plus être mis en oeuvre (environ 24 heures), ces temps induisent donc des contraintes au niveau des flux d'activités desdites lentilles. De plus, en cas de stockage ou d'attente prolongée entre deux opérations, il serait excessivement coûteux de disposer d'un encours de blocs de prise équivalent à celui de lentilles en attente. C'est ainsi qu'il s'avère parfois nécessaire, entre deux opérations, de libérer la lentille de son bloc de prise initial pour la transférer, la stocker ou la transporter plus aisément. Il est ensuite nécessaire, lorsque le processus est repris, de lui associer un nouveau bloc de prise, avec les difficultés pratiques qui en découlent non seulement en ce qui concerne le coulage de l'alliage à bas point de fusion et son recyclage, mais également pour ce qui est de la maîtrise géométrique d'une telle reprise de pièce, et les surcoûts associés. Il est en effet nécessaire, notamment comme évoqué précédemment pour les lentilles à surface complexes sans symétrie de révolution, de connaître la géométrie relative de la lentille par rapport à chaque poste concerné et, partant, par rapport au bloc de prise qui lui est associé. Il est donc nécessaire de réaliser, d'une manière ou d'une autre, une lecture de la face en cours de finition de la lentille. Une telle lecture constitue, à chaque reprise de pièce, une opération supplémentaire complexe et donc imprécise et coûteuse.

On a également proposé des systèmes de blocage de préformes de lentilles par dépression pneumatique. De tels systèmes mettent en oeuvre un bloc de préhension qui, pour former une sorte de ventouse à vide commandé, présente une cavité bordée par un joint annulaire contre lequel la préforme est mise en appui pour délimiter avec la cavité et son joint une chambre dans laquelle un vide relatif est créé sous l'effet d'une pompe à vide associée. Bien qu'il ne présente pas les mêmes inconvénients économiques et environnementaux que la solution du bloc coulé précédemment évoquée, ce type de blocage est peu usité en pratique, et s'avère difficile à mettre en oeuvre pour des surfaces complexes (autres que sphériques) vis à vis desquelles le joint n'assurerait pas un appui suffisamment précis. De plus le calage angulaire, lorsqu'il est prévu, est assuré par la mise en Correspondance visuelle de marques de repérage portées d'une part sur la préforme et d'autre part sur la ventouse. Ce repérage purement visuel est source d'imprécision et/ou de complications lors du blocage de la préforme/lentille.

Les documents US-A-3 577 690 et GB-A-2 084 493 étaient aussi connus.

Le document US-A-3 577 690 traite d'une méthode pour fabriquer une préforme de lentille multifocale où une pluralité d'objets de verre optiques, spécialement formée pour une transformation ultérieure plus efficace, est bloquée par le bord circulaire d'une roue de blocage et des galettes auxiliaires de verre optique sont mises dans les espaces entre les morceaux adjacents.

Le document GB-A-2 084 493 se rapporte à une méthode pour la production de lentilles ophtalmiques à partir d'une préforme de lentille, méthode qui comporte l'étape de découpe d'un positionneur ou d'entaillage d'une préforme de lentille à un endroit défini sur la périphérie, étape suivie par les opérations de meulage, rodage et de polissage.

Le but géneral de la présente invention est de faciliter ces opérations de prise et de reprise à géométrie constante des préformes de lentille.

A cet effet, il est proposé selon l'invention une préforme de lentille ophtalmique, possédant intrinsèquement au moins un organe d'indexation angulaire mécanique selon la revendication 1. Des modes particuliers de réalisation de l'invention sont décrit dans les revendications dépendantes.

Il est ainsi possible, à chaque étape du processus de travail, d'utiliser cet organe d'indexation intrinsèque de la préforme en combinaison avec un élément homologue du poste concerné, pour assurer une prise ou reprise de préforme avec une orientation spatiale et en particulier un calage angulaire précis et connus dans le référentiel du poste.

Selon une caractéristique avantageuse, la préforme présente deux organes d'indexation mécanique diamétralement opposés et distincts l'un de l'autre par au moins une de leurs dimensions. On augmente ainsi la précision et la fiabilité du calage. Le fait que les deux organes d'indexation soient distincts permet d'éviter toute erreur de positionnement angulaire de la préforme à 180 degrés près.

Dans un mode de réalisation offrant une grande généralité et une grande souplesse d'usage, l'organe d'indexation angulaire se présente sous la forme d'une encoche ménagée dans le corps même de la préforme. Par encoche, on entend toute marque, quelle que soit sa forme, ménagée en creux et non pas en relief. L'organe d'indexation est donc de nature 'soustractive', ce qui permet en particulier de le réaliser soit directement par une injection de la préforme, soit par une phase d'usinage préparatoire pour les matériaux qui ne se prêteraient pas à l'injection. De plus, l'absence de protubérance externes sur la préforme est en elle-même avantageuse, dans la mesure où une telle protubérance risquerait de gêner la manipulation et le stockage de la préforme, ainsi que d'augmenter les temps de cycle des postes de travail (usinage en particulier).

Pour une préforme à deux encoches d'indexation diamétralement opposées, les deux encoches se distinguent alors de préférence l'une de l'autre par leurs profondeurs.

Selon une caractéristique de l'invention, la préforme présente deux faces principales dont l'une est concave et une tranche périphérique reliant ces deux faces. De préférence, l'encoche, ou au moins l'une des encoches s'il en est prévu plusieurs, est ménagée sur la face concave, en périphérie externe de celle-ci, ce qui favorise un positionnement axial plus précis du fait de son diamètre.

Par commodité de fabrication et pour une plus grande efficacité de calage, l'encoche débouche intérieurement sur la face concave et extérieurement sur la tranche de la préforme. Dans un mode de réalisation préféré, l'encoche présente une forme de profilé à section en V dont la direction est perpendiculaire à l'axe central de la préforme. Cette forme évasée de l'encoche lui confère une capacité d'auto-centrage (pour un auto-calage angulaire de la préforme) qui facilite la prise ou reprise de la préforme, notamment lors d'une mise en situation par un organe de chargement automatique. Il peut être souhaitable à la fabrication comme à l'usage que le fond de l'encoche soit émoussé. Par exemple, le fond de l'encoche peut présenter une section circulaire.

Plus précisément, la section circulaire du fond de l'encoche présente un rayon de 1,5 mm environ. Les branches de la section en V de l'encoche forment entre elles un angle de 45 degrés environ.

Selon une autre caractéristique avantageuse de l'invention, la tranche de la préforme est globalement en dépouille (sensiblement conique) sur sa majeure partie, pour permettre son obtention par un procédé d'injection / moulage, mais possède une portion de préhension sensiblement cylindrique, adjacente à la face concave, destinée préhension et au serrage de la préforme sur les différents postes concernés.

Typiquement, l'épaisseur de la portion de préhension de la tranche est sensiblement inférieure au tiers de celle totale de ladite tranche. Mais l'épaisseur de la portion de préhension de la tranche reste de préférence supérieure à la profondeur de l'encoche, qui y débouche ainsi sur toute sa profondeur. Elle est de préférence supérieure ou égale à 5 mm.

Selon une autre caractéristique avantageuse de l'invention, la face concave est bordée par un rebord annulaire d'appui plan, permettant une assise stable et précise de la préforme contre une surface support correspondante du poste concerné. Lorsque, selon l'invention la tranche de la préforme est pourvue d'une portion cylindrique de préhension, le plan du rebord annulaire d'appui est, dans un mode de réalisation privilégié, perpendiculaire à l'axe de cette portion cylindrique de préhension.

D'autres caractéristiques et avantages de l'invention apparaîtront à la lecture de la description qui suit d'un mode de réalisation particulier donné à titre d'exemple non limitatif.

Il sera fait référence aux dessins présentés en annexe, parmi lesquels :

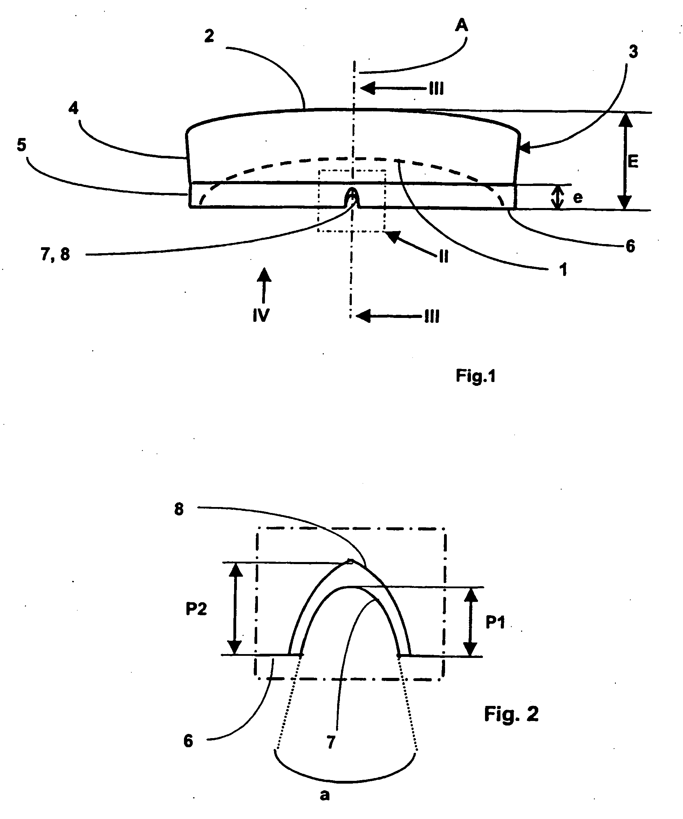

- la figure 1 est une vue de profil d'une préforme de lentille ophtalmique conforme à l'invention ;
- la figure 2 est une vue de détail agrandie de la zone II de la figure 1 ;

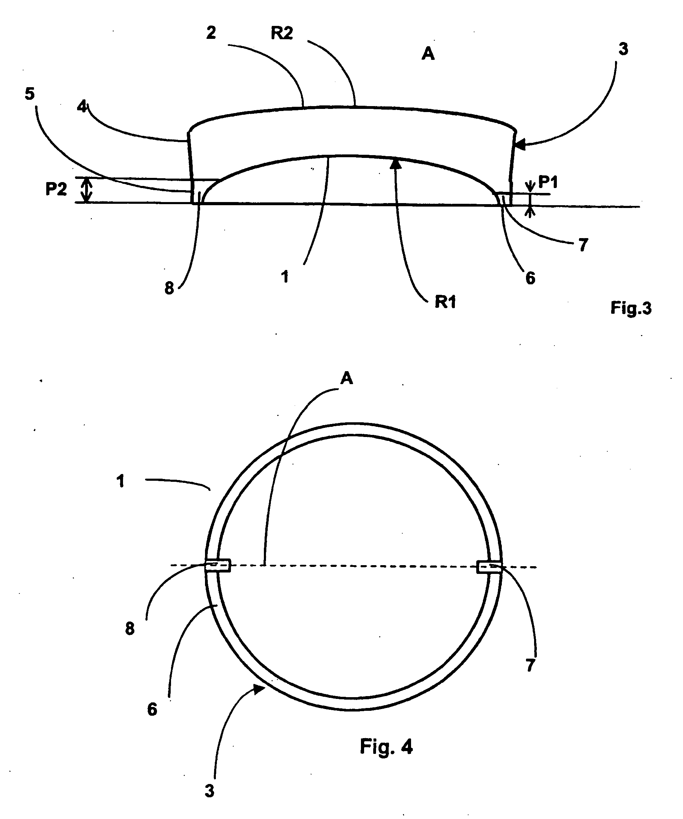

- la figure 3 est une vue en coupe suivant la ligne III-III de là figure 1 ;
- la figure 4 est une vue en plan selon la flèche IV de la figure 1.

En référence aux figures, une préforme de lentille ophtalmique selon l'invention présente deux faces principales, dont une face concave 1 et une face convexe 2, et une tranche périphérique 3 reliant ces deux faces.

Classiquement, la tranche de la préforme est légèrement conique, et donc en dépouille, sur la majeure partie 4 de son épaisseur, pour permettre son injection/moulage. Mais la tranche 3 possède, sur une faible proportion de son épaisseur, une portion de préhension 5 sensiblement cylindrique, qui est adjacente à la face concave 1.

Typiquement, l'épaisseur, notée e, de la portion de préhension 5 de la tranche 3 est sensiblement inférieure au tiers de celle totale, notée E, de ladite tranche. Mais l'épaisseur e de la portion de préhension 5 de la tranche 3 reste supérieure à la profondeur p1, p2 de chacune des deux encoches 7, 8, qui y débouche ainsi sur toute sa profondeur. En pratique, l'épaisseur e est de préférence supérieure ou égale à 5 mm et dans l'exemple illustré elle est voisine de 5 mm.

La face concave 1 est bordée par un rebord annulaire d'appui plan 6, permettant une assise stable et précise de la préforme contre une surface support correspondante du poste de travail concerné. Le plan de ce rebord annulaire d'appui 6 est perpendiculaire à l'axe de cette portion de préhension 5.

La préforme présente par ailleurs deux encoches 7, 8 qui, ménagées dans la matière même de la préforme, forment des organes intrinsèques (d'un seul tenant, issus d'injection/moulage, ou procurés préalablement par d'autres moyens, suivant la nature des matériaux mis en oeuvre) de son indexation mécanique sur un élément de machine associé de chacun des différents postes sur lequel la préforme doit être prise ou reprise. Par encoche, on entend toute marque, quelle que soit sa forme, ménagée en creux et non pas en relief, de dimensions suffisantes pour coopérer mécaniquement avec un organe d'indexation homologue du poste de travail concerné. Ce mode de coopération mécanique doit bien être distingué d'une coopération optique. Pour fixer les idées, on peut ainsi considérer que les dimensions (longueur, largeur ou diamètre, et profondeur) de chaque encoche sont toutes supérieures à 1 mm.

Les encoches d'indexation 7, 8 sont diamétralement opposées et se distinguent l'une de l'autre par au moins une de leurs dimensions, en l'espèce leurs profondeurs. Du fait de cette disposition sur le diamètre externe de la préforme, on augmente ainsi la précision et la fiabilité du calage angulaire. Le fait que les deux organes d'indexation soient distincts permet d'éviter toute erreur de positionnement angulaire de la préforme à 180 degrés près.

Les encoches d'indexation 7, 8 sont en l'espèce ménagées sur la face concave 1, en périphérie de celle-ci. Par commodité de fabrication et pour une plus grande efficacité de calage, chaque encoche débouche intérieurement sur la face concave et extérieurement sur la tranche de la préforme.

Plus précisément, dans le mode de réalisation illustré, chaque encoche d'indexation 7, 8 présente une forme de profilé à section en V dont la direction est sensiblement perpendiculaire à l'axe central de la préforme. Cette forme évasée de l'encoche lui confère une capacité d'auto-centrage qui facilite la prise ou reprise de la préforme avec un calage angulaire automatique de la préforme.

Pour faciliter la fabrication comme l'usage, le fond de l'encoche est émoussé et présente plus précisément une section circulaire d'un rayon de 1,5 mm. Les deux branches de la section en V de chaque encoche 7,8 forment entre elles un angle a de 45 degrés.

Aux essais, on a pu déterminer les caractéristiques géométriques avantageuses suivantes, auxquelles est conforme le mode de réalisation illustré :
- la face concave 1, sensiblement sphérique, présente un rayon R1 compris entre l'infini (la face 1 est alors plane) et 50 mm, par exemple comme en l'espèce voisin de 71 mm ;
- la face convexe 2, sensiblement sphérique, présente un rayon R2 compris entre 60 mm et l'infini (la face 2 est alors plane), par exemple comme en l'espèce voisin de 301 mm ;
- chaque encoche d'indexation 7, 8 présente une profondeur, notée respectivement p1, p2, comprise entre 3 et 6 mm, et la différence de profondeurs p2-p1 entre les deux encoches 7 et 8 est d'au moins 1 mm ; par exemple, en l'espèce, les deux encoches 7, 8 présentent des profondeurs respectives p1 et p2 de 3,4 et 4,4 mm, de sorte que la différence de profondeurs p2-p1 entre les deux encoches est de 1 mm ;
- l'épaisseur totale E de la tranche 3 de la préforme est comprise entre 12 et 25 mm, par exemple comme en l'espèce voisine de 23,5 mm ;
- le diamètre de la préforme pourra varier entre 60 et 100 mm en fonction des diamètres de verres finis utiles (en particulier, mais de manière non restrictive pour des raisons d'optimisation des enlèvements de matière), par exemple comme en l'espèce voisin de 81 mm.

En particulier, bien qu'il ait été décrit et illustré une préforme pourvue de deux encoches d'indexation diamétralement opposées et distinctes par leur profondeurs, il serait également possible de réaliser sans sortir du cadre de l'invention une préforme pourvue de deux encoches diamétralement opposées distinctes par une autre de leurs dimensions (par exemple leurs largeurs ou longueurs) ou encore d'un nombre impair d'encoche(s) (typiquement, une ou trois) réalisant d'office un calage certain sur 360 degrés, sans erreur possible à 180 degrés près.

## Revendications

1. Préforme de lentille ophtalmique
possédant intrinsèquement au moins un organe d'indexation angulaire mécanique (7, 8), et présentant :
- deux faces principales (1, 2) dont l'une (1) est concave ; et
- une tranche périphérique (3) reliant ces deux faces
**caractérisée en ce que** la tranche est globalement en dépouille sur sa majeure partie (4) mais possède une portion de préhension (5) sensiblement cylindrique, qui est adjacente à la face concave (1).

2. Préforme selon la revendication 1, présentant deux organes d'indexation mécanique (7, 8) diamétralement opposés et distincts l'un de l'autre par au moins une (P1, P2) de leurs dimensions.

3. Préforme selon l'une des revendications précédentes, dans laquelle l'organe d'indexation est une encoche (7, 8) ménagée dans le corps de la préforme.

4. Préforme selon les revendications 2 et 3, dans laquelle les deux encoches (7, 8) se distinguent l'une de l'autre par leurs profondeurs respectives (P1, P2).

5. Préforme selon la revendication 3, dans laquelle l'encoche (7, 8) est ménagée sur la face concave (1), en périphérie de celle-ci.

6. Préforme selon la revendication 5, dans laquelle l'encoche (7, 8) débouche intérieurement sur la face concave (1) et extérieurement sur la tranche (3) de la préforme.

7. Préforme selon l'une des revendications 5 et 6, dans laquelle l'encoche (7, 8) présente une forme de profilé à section en V dont la direction est sensiblement perpendiculaire à l'axe central (A) de la préforme.

8. Préforme selon la revendication 7, dans laquelle le fond de l'encoche (7, 8) est émoussé.

9. Préforme selon la revendication 8, dans laquelle le fond de l'encoche présente une section circulaire.

10. Préforme selon la revendication 9, dans laquelle la section circulaire du fond de l'encoche présente un rayon de 1,5 mm environ.

11. Préforme selon l'une des revendications 7 à 10, dans laquelle les branches de la section en V de l'encoche forment entre elles un angle (a) de 45 degrés environ.

12. Préforme selon l'une des revendications 5 à 11, dans laquelle l'encoche (7, 8) présente une profondeur (p1, p2) comprise entre 3 et 6 mm.

13. Préforme selon les revendications 4 et 12, dans laquelle la différence de profondeurs (p2-p1) entre les deux encoches (7, 8) est d'au moins 1 mm.

14. Préforme selon l'une des revendications précédentes, dans laquelle l'épaisseur (e) de la portion de préhension (5) de la tranche (3) est sensiblement inférieure au tiers de celle totale de ladite tranche.

15. Préforme selon les revendications 7 et 14, dans laquelle l'épaisseur (e) de la portion de préhension (5) de la tranche est supérieure à la profondeur (P1, P2) de l'encoche (7, 8), qui y débouche ainsi sur toute sa profondeur.

16. Préforme selon l'une des revendications 14 et 15, dans laquelle l'épaisseur (e) de la portion de préhension (5) de la tranche (3) est supérieure ou égale à 5 mm.

17. Préforme selon la revendication 16, dans laquelle l'épaisseur (e) de la portion de préhension (5) de la tranche (3) est voisine de 5 mm.

18. Préforme selon l'une des revendications précédentes, dans laquelle la périphérie de la face concave (1) est bordée par un rebord annulaire d'appui plan (6).

19. Préforme selon les revendications précédentes, dans laquelle le plan du rebord annulaire d'appui (6) est perpendiculaire à la portion de préhension cylindrique (5) de la tranche de la préforme.

20. Préforme selon l'une des revendications précédentes, dont l'autre face (2) est convexe.

21. Préforme selon la revendication20, dans laquelle :
- la face concave (1), sensiblement sphérique, présente un rayon (R1) compris entre l'infini et 50 mm;
- la face convexe (2), sensiblement sphérique, présente un rayon (R2) compris entre 60 mm et l'infini ;
- l'épaisseur totale E de la tranche 3 de la préforme est comprise entre 12 et 25mm.

22. Préforme selon la revendication21, dans laquelle :
- la face concave (1) présente un rayon (R1) voisin de 71 mm ;
- la face convexe (2) présente un rayon (R2) voisin de 301 mm ;
- les deux encoches (7, 8) présentent des profondeurs respectives (p1, p2) de 3,4 et 4,4 mm, de sorte que la différence de profondeurs (p2-P1) entre les deux encoches est de 1 mm ;
- l'épaisseur totale E de la tranche (3) de la préforme est voisine de 23,5 mm.

23. Préforme selon l'une des revendications précédentes, dont le diamètre est compris entre 60 et 100 mm.

## Claims

1. An ophthalmic lens preform or blank, having, intrinsically, at least one element for mechanical angular registration (7, 8), and
two main faces (1,2), one of which (1) is concave, and
a peripheral edge (3) joining the said two faces
**characterized in that** the edge of the preform is undercut on its major portion (4) but has a clamping portion (5) that is substantially cylindrical adjacent to the concave face (1).

2. The preform of claim 1, having two diametrically opposed elements for mechanical registration (7, 8), said elements differing from each other by at least one (P1, P2) of their dimensions.

3. The preform of one of the preceding claims, wherein said element for registration is a notch (7, 8) formed in a body of said preform.

4. The preform of claim 2 and 3, wherein said notches (7, 8) differ from each other by their respective depths (P1, P2).

5. The preform of claim 3, wherein said notch (7, 8) is provided on the concave face (1), at the periphery thereof.

6. The preform of claim 5, wherein the notch (7, 8) opens inwardly at the concave face (1) and outwardly at the edge (3) of the preform.

7. The preform of one of claims 5 and 6, wherein the notch (7, 8) has a V-section profile the direction of which is substantially perpendicular to a central axis (A) of the preform.

8. The preform of claim 7, wherein the base of the notch (7, 8) is smoothed off.

9. The preform of claim 8, wherein a base of the notch has a circular section.

10. The preform of claim 9, wherein the circular cross-section of the base of the notch has a radius of about 1.5 mm.

11. The preform of one of claims 7 to 10, wherein arms of the V-section of the notch make an angle (a) with each other of about 45°.

12. The preform of one of claims 5 to 11, wherein the notch (7, 8) has a depth (p1, p2) comprised between 3 and 6 mm.

13. The preform of claim 4 and 12, wherein the difference in depth (p2 - p1) between the two notches (7, 8) is at least 1 mm.

14. The preform according to one of the preceding claims, wherein a thickness (e) of the clamping portion (5) of the edge (3) is substantially less than one third of the total thickness of said edge.

15. The preform of claims 7 and 14, wherein the thickness (e) of the clamping portion (5) of the edge (3) is greater than the depth (P1, P2) of the notch (7, 8) which thus opens out there over its whole depth.

16. The preform of one of claims 14 and 15, wherein the thickness (e) of the clamping portion (5) of the edge (3) is greater than or equal to 5 mm.

17. The preform of claim 16, wherein the thickness (e) of the clamping portion (5) of the edge (3) is about 5 mm.

18. The preform according to one of the preceding claims, wherein the periphery of the concave face (1) is bordered by a flat annular abutment rim (6).

19. The preform according to the preceding claims, wherein the flat annular abutment rim (6) is perpendicular to a cylindrical clamping portion (5) of the preform edge.

20. The preform according to one of the preceding claims, the other face (2) of which is convex.

21. The preform of claim 20, wherein:
- the concave face (1) which is substantially spherical has a radius (R1) comprised between infinity and 50 mm;
- the convex face (2) which is substantially spherical has a radius (R2) comprised between 60 mm and infinity;
- the total thickness E of the edge (3) of the preform is comprised between 12 and 25 mm.

22. The preform of claim 21, wherein:
- the concave face (1) has a radius (R1) of about 71 mm;
- the convex face (2) has a radius (R2) of about 301 mm;
- the two notches (7, 8) have respective depths (p1, p2) of 3.4 and 4.4 mm, whereby the difference in depth (p2 - P1) between the two notches is 1 mm;
- the total thickness E of the edge (3) of the preform is about 23.5 mm

23. The preform according to one of the preceding claims, the diameter of which is comprised between 60 and 100 mm.

## Patentansprüche

1. Vorformling einer ophthalmischen Linse, der in sich mindestens ein Element zur mechanischen Winkelindexierung (7, 8) hat und Folgendes aufweist:
- zwei Hauptflächen (1, 2), wobei eine (1) davon konkav ist; und
- einen Umfangsrand (3), der die beiden Flächen verbindet,
**dadurch gekennzeichnet, dass** der Umfangsrand über seinen Hauptteil (4) hinweg verjüngt ist, aber einen im Wesentlichen zylindrischen Greifabschnitt (5) aufweist, der benachbart zur konkaven Fläche (1) liegt.

2. Vorformling nach Anspruch 1, der zwei diametral gegenüberliegende Elemente zur mechanischen Indexierung (7, 8) aufweist, die sich durch mindestens eine (P1, P2) ihrer Abmessungen voneinander unterscheiden.

3. Vorformling nach einem der vorangegangenen Ansprüche, wobei das Element zur Indexierung eine Auskerbung (7, 8) ist, die im Körper des Vorformlings ausgebildet ist.

4. Vorformling nach Anspruch 2 und 3, wobei die beiden Auskerbungen (7, 8) sich durch ihre jeweilige Tiefe (P1, P2) voneinander unterscheiden.

5. Vorformling nach Anspruch 3, wobei die Auskerbung (7, 8) an der konkaven Fläche (1) am Umfang dieser ausgebildet ist.

6. Vorformling nach Anspruch 5, wobei sich die Auskerbung (7, 8) unten an der konkaven Fläche (1) und außen am Rand (3) des Vorformlings öffnet.

7. Vorformling nach einem der Ansprüche 5 oder 6, wobei die Auskerbung (7, 8) eine Profilform mit v-förmigem Querschnitt aufweist, dessen Richtung im wesentlichen senkrecht zur Mittelachse (A) des Vorformlings steht.

8. Vorformling nach Anspruch 7, wobei der Boden der Auskerbung (7, 8) stumpf ist.

9. Vorformling nach Anspruch 8, wobei der Boden der Auskerbung einen kreisförmigen Querschnitt aufweist.

10. Vorformling nach Anspruch 9, wobei der kreisförmige Querschnitt des Bodens der Auskerbung einen Radius von etwa 1,5 mm aufweist.

11. Vorformling nach einem der Ansprüche 7 bis 10, wobei die Arme des V-förmigen Querschnitts der Auskerbung zwischen sich einen Winkel (a) von etwa 45 Grad ausbilden.

12. Vorformling nach einem der Ansprüche 5 bis 11, wobei die Auskerbung (7, 8) eine Tiefe (p1, p2) zwischen 3 und 6 mm aufweist.

13. Vorformling nach Anspruch 4 und 12, wobei der Tiefenunterschied (p2 - p1) zwischen den beiden Auskerbungen (7, 8) mindestens 1 mm beträgt.

14. vorformling nach einem der vorangegangenen Ansprüche, wobei die Dicke (e) des Greifabschnitts (5) des Rands (3) im Wesentlichen kleiner als ein Drittel der Gesamtdicke des Rands ist.

15. Vorformling nach Anspruch 7 und 14, wobei die Dicke (e) des Greifabschnitts (5) des Rands (3) größer als die Tiefe (P1, P2) der Auskerbung (7, 8) ist, die sich somit über ihre ganze Tiefe hinweg darin öffnet.

16. Vorformling nach einem der Ansprüche 14 oder 15, wobei die Dicke (e) des Greifabschnitts (5) des Rands (3) größer als oder gleich 5 mm beträgt.

17. Vorformling nach Anspruch 16, wobei die Dicke (e) des Greifabschnitts (5) des Rands (3) im Bereich von 5 mm liegt.

18. Vorformling nach einem der vorangegangenen Ansprüche, wobei der Umfang der konkaven Fläche (1) von einem ringförmigen, ebenen Auflagekranz (6) umrandet ist.

19. Vorformling nach einem der vorangegangenen Ansprüche, wobei die Ebene des ringförmigen Auflagekranzes (6) senkrecht zum zylindrischen Greifabschnitt (5) des Rands (3) des Vorformlings steht.

20. Vorformling nach einem der vorangegangenen Ansprüche, wobei die andere Fläche (2) konvex ist.

21. Vorformling nach Anspruch 20, wobei:
- die konkave, im Wesentlichen kugelförmige Fläche (1) einen Radius (R1) zwischen unendlich und 50 mm aufweist;
- die konvexe, im Wesentlichen kugelförmige Fläche (2) einen Radius (R2) zwischen 60 mm und unendlich aufweist;
- die Gesamtdicke E des Rands (3) des Vorformlings zwischen 12 und 25 mm beträgt.

22. vorformling nach Anspruch 21, wobei:
- die konkave Fläche (1) einen Radius (R1) im Bereich von 71 mm aufweist;
- die konvexe Fläche (2) einen Radius (R2) im Bereich von 301 mm aufweist;
- die zwei Auskerbungen (7, 8) eine jeweilige Tiefe (p1, p2) von 3,4 und 4,4 mm aufweisen, sodass der Tiefenunterschied (p2 - p1) zwischen den zwei Auskerbungen 1 mm beträgt;
- die Gesamtdicke E des Rands (3) des Vorformlings im Bereich von 23,5 mm liegt.

23. vorformling nach einem der vorangegangenen Ansprüche, dessen Durchmesser zwischen 60 und 100 mm beträgt.
